# EUROPÄISCHE PATENTSCHRIFT

(11) **EP 3 622 248 B1**
(45) Veröffentlichungstag und Bekanntmachung des Hinweises auf die Patenterteilung: **13.10.2021**
(21) Anmeldenummer: 18720615.6
(22) Anmeldetag: 27.04.2018
(51) Int. Cl.: G01C 19/38

(54) **INERTIALES MESSGERÄT ZUM BESTIMMEN EINER NORDRICHTUNG**
INERTIAL MEASUREMENT DEVICE FOR FINDING NORTH
DISPOSITIF DE MESURE INERTIELLE POUR DETERMINER UNE DIRECTION NORD

(30) Priorität: 11.05.2017 DE 102017110205
(43) Veröffentlichungstag der Anmeldung: 18.03.2020
(73) Patentinhaber: Northrop Grumman LITEF GmbH, 79115 Freiburg (DE)
(72) Erfinder: DAHLHOFF, Andrea, 79312 Emmendingen (DE); KÜHNE, Claus, 79117 Freiburg (DE); SPANNAGEL, Christian, 79112 Freiburg (DE)
(74) Vertreter: Müller Hoffmann & Partner
(86) Internationale Anmeldenummer: PCT/EP2018/060966
(87) Internationale Veröffentlichungsnummer: WO 2018/206330

(56) Entgegenhaltungen:
- WO-A1-2013/123555
- CN-A- 106 123 880

## Beschreibung

Die Erfindung betrifft ein inertiales Messgerät.

Inertiale Messgeräte sind bekannt. So ist zum Beispiel in der AU 2012 101 210 A4 ein Inertial-Messgerät beschrieben, das auf der Bohrstange eines Erdbohrgeräts angebracht werden kann, um die Ausrichtung des Bohrers vor dem eigentlichen Bohrbetrieb bestimmen zu können. Mit Hilfe des Inertial-Messgeräts kann die Ausrichtung des Bohrers präzise vorgenommen werden. Danach wird das Messgerät entfernt und der Bohrvorgang begonnen.

Inertial-Messgeräte, sofern überhaupt als eigenständige portable Messgeräte ausgeführt, sind schwer zu handhaben und damit unpraktisch.

Der Erfindung liegt die Aufgabe zugrunde, ein Inertial-Messgerät anzugeben, bei dem die Handhabung gegenüber dem Stand der Technik verbessert ist.

Die Aufgabe wird gelöst durch ein Inertial-Messgerät mit den Merkmalen von Anspruch 1 sowie durch ein System mit den Merkmalen des nebengeordneten Anspruchs. Vorteilhafte Ausgestaltungen ergeben sich aus den abhängigen Ansprüchen.

Eine inertiale Messeinheit (Inertial-Messeinheit) ist an sich bekannt. Eine inertiale Messeinheit (englisch inertial measurement unit, IMU) ist eine räumliche Kombination mehrerer Inertialsensoren wie Beschleunigungssensoren und Drehratensensoren. Zur Erfassung der sechs möglichen kinematischen Freiheitsgrade verfügt eine IMU über drei jeweils aufeinander orthogonal stehende Beschleunigungssensoren (Translationssensoren) für die Erfassung der translatorischen Bewegung in x- bzw. y- bzw. z-Achse und drei orthogonal zueinander angebrachten Drehratensensoren (Gyroskopische Sensoren) für die Erfassung rotierender (kreisender) Bewegungen in x- bzw. y- bzw. z-Achse. Eine inertiale Messeinheit liefert als Messwerte drei lineare Beschleunigungswerte für die translatorische Bewegung und drei Winkelgeschwindigkeiten für die Drehraten. In einem Trägheitsnavigationssystem (INS) wird aus den Messwerten der IMU für die lineare Beschleunigungen, nach Kompensation der Erdbeschleunigung, durch Integration die lineare Geschwindigkeit und nochmalige Integration die Position im Raum bezogen zu einem Referenzpunkt ermittelt. Die Integration der drei Winkelgeschwindigkeiten liefert, bezogen zu einem Referenzpunkt, die Orientierung im Raum.

Die Batterie dient als Energiespeicher und versorgt die Messeinheit und die drahtlose Schnittstelle mit elektrischer Energie. Sämtliche Komponenten des Messgeräts sind in dem Gehäuse geschützt untergebracht. Mit Hilfe des Einhand-Tragegriffs kann das kompakte Gehäuse mitsamt den darin untergebrachten Komponenten leicht mit nur einer Hand getragen werden, ähnlich wie ein Koffer. Dadurch ist das Messgerät sehr mobil und einfach zu handhaben.

Die Inertial-Messeinheit kann eine Nordsucher-Einrichtung aufweisen, mit drei Kreiseln und drei Beschleunigungssensoren. Dabei kann es sich zum Beispiel um eine IMU (Inertial Measurement Unit) mit drei zu einer Triade angeordneten faseroptischen Kreiseln sowie mit drei Beschleunigungssensoren handeln. Die Beschleunigungssensoren können als MEMS-Beschleunigungssensoren (Mikro-Elektro-Mechanische Systeme) ausgebildet sein.

Die Inertial-Messeinheit kann insbesondere dazu ausgebildet sein, Nick- und Roll-Lagewinkel zu messen.

Die Batterie kann als wiederaufladbarer Akku ausgebildet sein.

Der Akku kann in dem Gehäuse wechselbar eingesteckt sein. Das ermöglicht es, den Akku gegen einen Ersatzakku leicht auszutauschen. Dabei kann es sinnvoll sein, den Akku mit Hilfe einer Verriegelungseinrichtung im Gerät bzw. in dem Gehäuse zu fixieren, um in allen Betriebslagen sicherzustellen, dass der Akku nicht aus dem Gehäuse und der dafür vorgesehenen Akkuaufnahme im Gehäuse herausfallen kann.

Die Wechselmöglichkeit des Akkus ist vorteilhaft, um Akkus mit verhältnismäßig geringer Kapazität einzusetzen. Es muss somit in dem Messgerät nicht eine Batterie mit großer Kapazität vorgesehen sein, die auch entsprechend viel Gewicht mit sich bringen würde. Vielmehr können beliebig viele Ersatzakkus bereitgestellt werden, um bei Bedarf auch in relativ kurzen Zyklen den Akku zu wechseln, damit ein Dauerbetrieb des Messgeräts erreicht werden kann.

Die drahtlose Schnittstelle kann eine Bluetooth-Schnittstelle sein, zum Beispiel in Form einer Schnittstellenkarte, die in dem Gehäuse untergebracht ist. Die drahtlose Schnittstelle ermöglicht es, Informationen mit dafür außerhalb des Messgeräts vorgesehenen Einrichtungen, zum Beispiel Ausgabe-, Anzeige- oder Eingabeeinrichtungen per Funk zu ermöglichen. Dadurch erübrigt sich ein ansonsten erforderliches Kabel zur Datenübertragung.

Wenigstens ein Teil des Gehäuses und ein Teil des Tragegriffs sind einstückig miteinander ausgebildet.

Dabei können das Gehäuse und der Tragegriff im Wesentlichen vollständig aus Kunststoff hergestellt sein. Je nach Ausgestaltung des Gehäuses kann es zweckmäßig sein, das Gehäuse in mehrere Teile, zum Beispiel zwei Gehäuseschalen aufzuteilen. Ebenso kann es zweckmäßig sein, das Gehäuse zu versiegeln, um die darin untergebrachten Komponenten zu schützen und auch vor unbefugten Eingriffen zu bewahren.

Das Gehäuse erstreckt sich in einer Längsrichtung, wobei sich der Tragegriff ebenfalls in der Längsrichtung des Gehäuses erstreckt. Dadurch lässt sich das Gehäuse über den Tragegriff gut kontrollieren und damit sicher tragen.

Das Gehäuse weist an seiner Unterseite eine sich horizontal erstreckende Befestigungsplatte auf, zum Befestigen des Messgeräts an einem Gegenstand, z.B. an dem Messobjekt. Die Befestigungsplatte kann damit eine horizontale Befestigungsebene definieren. Sie kann hochpräzise ausgeführt sein, um eine Befestigung an dem Gegenstand mit hoher Genauigkeit zu realisieren. An der Befestigungsplatte können wahlweise entsprechend dafür vorgesehene Adapterplatten befestigt werden, mit deren Hilfe das Messgerät an dem dafür vorgesehenen Gegenstand befestigt werden kann.

Bei dem Gegenstand kann es sich insbesondere um das zu messende Objekt handeln, also das Objekt, dessen Lage bestimmt werden soll.

Der Tragegriff kann einen sich im Wesentlichen parallel zu der Befestigungsplatte erstreckenden ersten Griffbereich aufweisen.

Weiterhin kann der Tragegriff einen sich in einem Winkel von mehr als 30°, insbesondere mehr als 45°, insbesondere mehr als 60° zu der Befestigungsplatte erstreckenden zweiten Griffbereich aufweisen, der sich an den ersten Griffbereich anschließt. Das Messgerät kann damit mit einer Hand sowohl wahlweise an dem ersten Griffbereich oder an dem zweiten Griffbereich gehalten werden. Während der erste Griffbereich ein Aufsetzen der Befestigungsplatte auf dem zu messenden Gegenstand erleichtert, kann bei einem Greifen des zweiten Griffbereichs das Messgerät zum Beispiel senkrecht aufgestellt werden. Zu diesem Zweck können gegenüberliegend von dem zweiten Griffbereich an der Außenseite einer gegenüberliegenden Stirnseite des Gehäuses entsprechende Standfüße an dem Gehäuse ausgebildet sein.

Der erste Griffbereich kann in den zweiten Griffbereich übergehen und dabei einen Knick vollziehen. Der zweite Griffbereich steht somit in einem entsprechenden Winkel zu dem ersten Griffbereich.

An dem Gehäuse, insbesondere an dem Tragegriff, kann eine Befestigungseinrichtung vorgesehen sein, zum Befestigen eines Tragriemens. Die Befestigungseinrichtung kann zum Beispiel zwei Ösen aufweisen, die an dem Gehäuse bzw. insbesondere an dem Tragegriff ausgebildet sind und an denen der Tragriemen befestigt werden kann. Damit ist es möglich, das Messgerät an dem Tragriemen zum Beispiel auf der Schulter zu tragen und somit die Hände für andere Tätigkeiten frei zu haben.

Weiterhin wird ein System angegeben, mit einem Inertial-Messgerät, wie es oben beschrieben wurde, einem mobilen Datenendgerät, einem auf dem mobilen Datenendgerät lauffähigen Computerprogramm, wobei über die Schnittstelle ein Datenaustausch zwischen dem Inertial-Messgerät und dem Datenendgerät möglich ist. Bei dem Datenendgerät kann es sich zum Beispiel um ein Smartphone, ein Tablet oder einen Laptop handeln. Im Falle eines Smartphones oder eines Tablets kann das Computerprogramm als so genannte App ausgebildet sein.

Das Datenendgerät kann eine Anzeigeeinrichtung aufweisen, zum Anzeigen der von dem Inertial-Messgerät gemessenen und über die Schnittstelle übertragenen Messergebnisse.

Das Datenendgerät kann eine Eingabeeinrichtung aufweisen, zum Eingeben von Steuerungsbefehlen zum Ansteuern des Inertial-Messgeräts.

Wenn somit das Datenendgerät ein Smartphone oder Tablet ist und damit über die Bildschirmanzeige und den berührungsempfindlichen Bildschirm sowohl eine Anzeige als auch eine Eingabe ermöglicht, kann mit Hilfe des Smartphones oder eines entsprechenden Tablets die Bedienung des Messgeräts vollständig über das Smartphone erfolgen. Aus diesem Grund ist es nicht erforderlich, an dem eigentlichen Inertial-Messgerät Anzeigen oder Bedien- bzw. Steuerungselemente vorzusehen. Es kann lediglich zweckmäßig sein, an dem Inertial-Messgerät einen Ein-Aus-Schalter vorzusehen.

Das Inertial-Messgerät eignet sich zum Beispiel zum Ausrichten von Bohrköpfen oder Bohrstangen bei z.B. Erdbohrgeräten und kann zu diesem Zweck entsprechend an einer Bohrstange befestigt werden. Ein weiteres Anwendungsgebiet kann das Überwachen von baulichen Strukturen, wie zum Beispiel hohen Gebäuden, Staumauern, Tragwänden etc. sein. Ebenso kann das Inertial-Messgerät zur Überwachung der Struktur eines Windrads genutzt werden. Als weiteres Anwendungsgebiet kann eine Gleisvermessung dienen, bei der das Inertial-Messgerät auf einer auf dem zu vermessenden Gleis fahrbaren Lohre angebracht ist.

Diese und weitere Vorteile und Merkmale der Erfindung werden nachfolgend anhand eines Beispiels unter Zuhilfenahme der begleitenden Figuren näher erläutert. Es zeigen:
- **Fig. 1**: ein Diagramm mit einer Übersicht über ein Messsystem mit einem Inertial-Messgerät;
- **Fig. 2**: das Inertial-Messgerät von Fig. 1 in Perspektivdarstellung;
- **Fig. 3**: das Inertial-Messgerät in verschiedenen Seitansichten.
- **Fig. 4**: eine vergrößerte Seitenansicht des Inertial-Messgeräts von Fig. 3; und
- **Fig. 5**: eine vergrößerte Untersicht des Inertial-Messgeräts von Fig. 3.

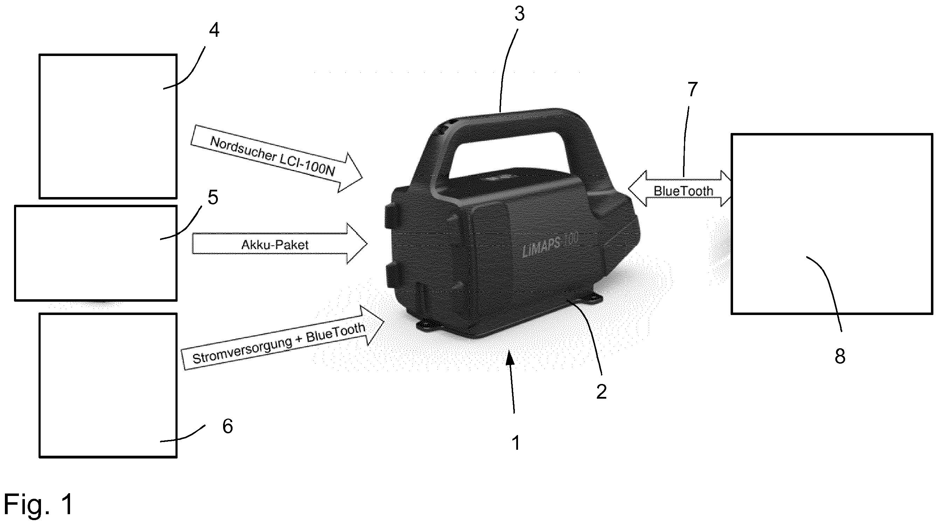

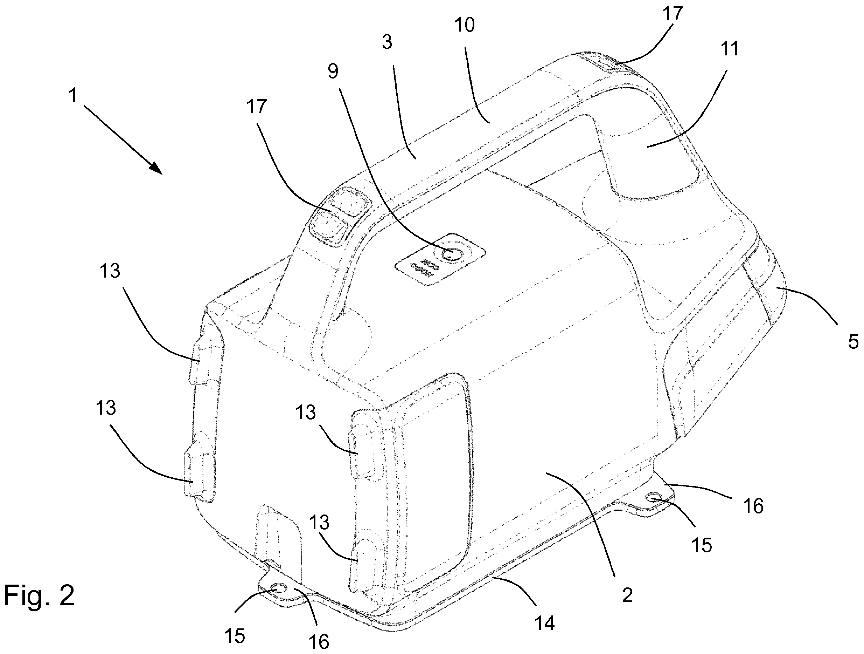

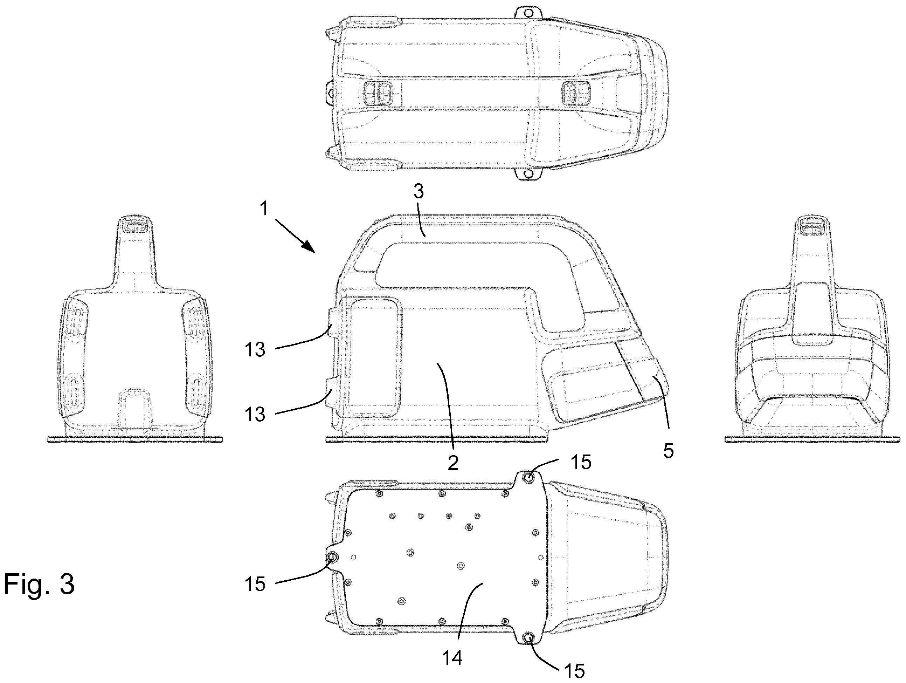

In den Fig. 1 bis 5 wird ein Inertial-Messgerät 1 gezeigt.

Das Inertial-Messgerät 1 weist ein Gehäuse 2 auf, an dem ein Tragegriff 3 ausgebildet ist.

Im Inneren des Gehäuses 2 ist eine als Nordsucher dienende Inertial-Messeinheit 4, eine wiederaufladbare Batterie 5 und eine Schnittstellenkarte 6 zur Bereitstellung einer drahtlosen Bluetooth-Schnittstelle 7 untergebracht.

Über die Bluetooth-Schnittstelle 7 ist es möglich, dass das Inertial-Messgerät 1 mit einem als Datenendgerät dienenden Smartphone 8 kommuniziert. Auf dem Smartphone 8 kann eine sogenannte "App" installiert sein, mit deren Hilfe Daten, insbesondere Mess-, Zustands- oder andere Betriebsdaten von dem Inertial-Messgerät 1 angezeigt werden können, die über die Bluetooth-Schnittstelle 7 an das Smartphone 8 übermittelt werden. Ebenso ist es möglich, über das Smartphone 8 Steuerbefehle einzugeben, die dann über die Bluetooth-Schnittstelle 7 an das Inertial-Messgerät 1 übermittelt werden.

Die Batterie 5 kann als Akkupaket ausgebildet sein, das an einer Stirnseite in das Gehäuses 2 einsteckbar ist. Auf diese Weise kann eine leere Batterie leicht aus dem Gehäuse 2 entnommen und durch eine frisch aufgeladene Batterie 5 ersetzt werden. Dabei bleibt das restliche Gehäuse 2 verschlossen, so dass die empfindlichen Komponenten, insbesondere die Inertial-Messeinheit 4 und die Schnittstellenkarte 6 gut vor Einflüssen von außen geschützt sind.

Insbesondere kann in dem Gehäuse 2 eine entsprechende Akku- bzw. Batterieaufnahme vorgesehen sein, in die sich die Batterie 5 zuverlässig und sicher einstecken kann. Die Batterieaufnahme kann von den restlichen Komponenten im Inneren des Gehäuses 2, insbesondere der Inertial-Messeinheit 4 und der Schnittstellenkarte 6 separiert sein, um eine Beschädigung dieser Komponenten bei der Handhabung der Batterie 5 zu vermeiden. Zudem kann die Batterieaufnahme gegenüber dem Inneren des Gehäuses 2 abgedichtet sein, um ein Eindringen von Feuchtigkeit zu verhindern.

An dem Gehäuse 2 ist ein Netzschalter 9 vorgesehen, über den das Inertial-Messgerät 1 ein- und ausgeschaltet werden kann.

Der Tragegriff 3 ist mit dem restlichen Gehäuse 2 einstückig verbunden. Zweckmäßigerweise können somit das Gehäuse 2 und der Tragegriff 3 als einheitliches Kunststoffbauteil hergestellt werden. Somit kann das Gehäuse 2 einstückig in den Tragegriff 3 übergehen. Der Tragegriff 3 muss somit bei dieser Ausführungsform nicht als eigenständiges Bauelement an dem Gehäuse 2 befestigt werden.

Der Tragegriff 3 gliedert sich in zwei Griffbereiche: ein erster Griffbereich 10 erstreckt sich im Wesentlichen horizontal. Von dem ersten Griffbereich 10 knickt ein zweiter Griffbereich 11 in einem Winkel ab. Der Bediener kann somit den Tragegriff 3 an beiden Griffbereichen 10, 11 komfortabel greifen.

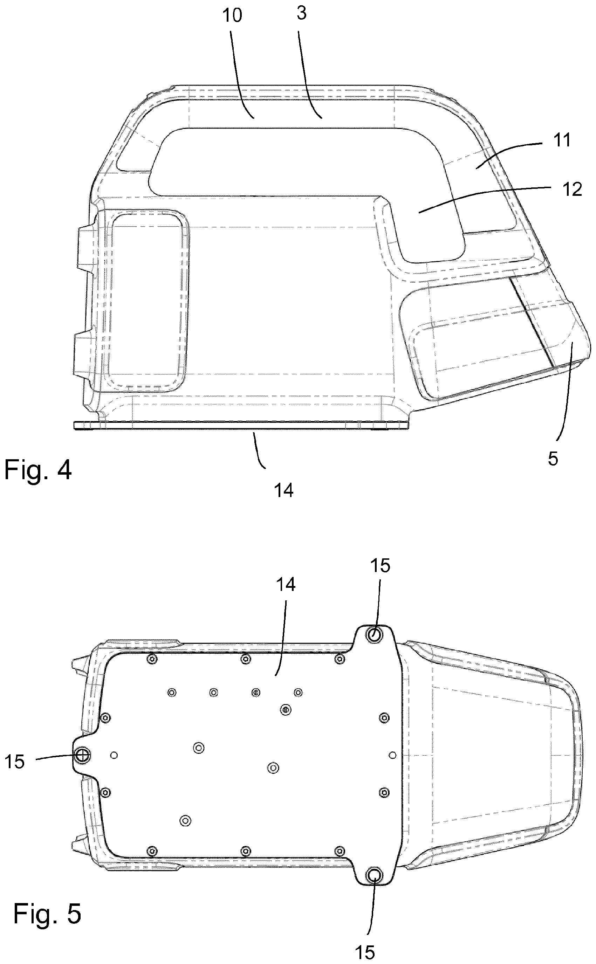

Um ein Greifen auch des etwas kürzer ausgebildeten zweiten Griffbereichs 11 zu ermöglichen, ist an dem Gehäuse eine Ausnehmung 12 ausgebildet (Fig. 4).

Gegenüberliegend von dem zweiten Griffbereich 11 und der Ausnehmung 12 sind an der gegenüberliegenden Stirnseite des Gehäuses 2 mehrere Standfüße 13 (im gezeigten Beispiel vier Standfüße 13) ausgebildet. Der Bediener hat damit die Möglichkeit, das Gehäuse 2 an dem zweiten Griffbereich 11 zu ergreifen und auf die Standfüße 13 abzustellen.

An der Unterseite des Gehäuses 2 erstreckt sich eine horizontale Befestigungsplatte 14. Die Befestigungsplatte 14 ist an dem Gehäuse 2 mit hoher Präzision stabil befestigt und stellt das mechanische Anschlussmittel für das Gehäuse 2 und damit das Inertial-Messgerät 1 dar. An der Befestigungsplatte 14 sind in dem gezeigten Beispiel drei Befestigungsöffnungen 15 vorgesehen, die jeweils in Befestigungslaschen 16 ausgebildet sind, welche sich von der eigentlichen Befestigungsplatte 14 erstrecken.

An der Oberseite des Tragegriffs 3 sind zwei als Befestigungseinrichtung dienende Ösen 17 vorgesehen. Durch die Ösen 17 kann ein nicht dargestellter Tragriemen durchgefädelt werden, um somit ein Tragen des Inertial-Messgeräts 1 mit Hilfe des Tragriemens zu ermöglichen.

## Patentansprüche

1. Inertial-Messgerät (1), mit
- einer Inertial-Messeinheit (4) zum Bestimmen einer Nordrichtung und zum Bestimmen von Lagewinkeln;
- einer Batterie (5);
- einer drahtlosen Schnittstelle (6); und mit
- einem Gehäuse (2), in dem die Inertial-Messeinheit (1), die Batterie (5) und die Schnittstelle (6) untergebracht sind;
wobei
- an dem Gehäuse (2) ein Tragegriff (3) vorgesehen ist, der als Einhand-Tragegriff ausgebildet ist, zum bestimmungsgemäßen Tragen des Inertial-Messgeräts (1) mit nur einer Hand;
- das Gehäuse (2) an seiner Unterseite eine sich horizontal erstreckende Befestigungsplatte (14) aufweist, zum Befestigen des Inertial-Messgeräts an einem Gegenstand;
- der Tragegriff (3) an der Oberseite des Gehäuses (2) gegenüber von der Befestigungsplatte (14) angeordnet ist;
- das Gehäuse (2) sich in einer Längsrichtung erstreckt;
- der Tragegriff (3) sich ebenfalls in der Längsrichtung des Gehäuses (2) erstreckt; und wobei
- wenigstens ein Teil des Gehäuses (2) und ein Teil des Tragegriffs (3) einstückig ausgebildet sind.

2. Inertial-Messgerät nach Anspruch 1, wobei die Inertial-Messeinheit (4) eine Nordsucher-Einrichtung ist, mit drei Kreiseln und drei Beschleunigungssensoren.

3. Inertial-Messgerät nach einem der vorstehenden Ansprüche, wobei die Batterie (5) ein wiederaufladbarer Akku ist.

4. Inertial-Messgerät nach einem der vorstehenden Ansprüche, wobei der Acku in dem Gehäuse (2) wechselbar eingesteckt ist.

5. Inertial-Messgerät nach einem der vorstehenden Ansprüche, wobei die Schnittstelle (6) eine Bluetooth-Schnittstelle ist.

6. Inertial-Messgerät nach einem der vorstehenden Ansprüche, wobei der Tragegriff (3) einen sich im Wesentlichen parallel zu der Befestigungsplatte (14) erstreckenden ersten Griffbereich (10) aufweist.

7. Inertial-Messgerät nach einem der vorstehenden Ansprüche, wobei der Tragegriff (3) einen sich in einem Winkel von mehr als 30 Grad, insbesondere mehr als 45 Grad, insbesondere mehr als 60 Grad zu der Befestigungsplatte (14) erstreckenden zweiten Griffbereich (11) aufweist, der sich an den ersten Griffbereich (10) anschließt.

8. Inertial-Messgerät nach einem der vorstehenden Ansprüche, wobei an dem Gehäuse (2) und/oder dem Tragegriff (3) eine Befestigungseinrichtung (17) vorgesehen ist, zum Befestigen eines Tragriemens.

9. System mit
- einem Inertial-Messgerät (1) nach einem der vorstehenden Ansprüche;
- einem mobilen Datenendgerät (8); und mit
- einem auf dem mobilen Datenendgerät (8) lauffähigen Computerprogramm;
wobei
- über die Schnittstelle (7) ein Datenaustausch zwischen dem Inertial-Messgerät und dem Datenendgerät möglich ist.

10. System nach Anspruch 9, wobei das Datenendgerät (8) eine Anzeigeeinrichtung aufweist, zum Anzeigen der von dem Inertial-Messgerät gemessenen und über die Schnittstelle übertragenen Messergebnisse.

11. System nach Anspruch 9 oder 10, wobei das Datenendgerät (8) eine Eingabeeinrichtung aufweist, zum Eingeben von Steuerungsbefehlen, zum Ansteuern des Inertial-Messgeräts.

## Claims

1. An inertial measuring device (1), comprising
- an inertial measuring unit (4) for determining a north direction and for determining position angles;
- a battery (5);
- a wireless interface (6); and comprising
- a housing (2), within which the inertial measuring unit (1), the battery (5) and the interface (6) are housed;
wherein
- a carrying handle (3) is provided on the housing (2), which is formed as a one-hand carrying handle for carrying the inertial measuring device (1) with one hand only during its intended use;
- the housing (2) has a horizontally extending fastening plate (14) on its underside to fasten the inertial measuring device on an object;
- the carrying handle (3) is arranged on the upper side of the housing (2) opposite of the fastening plate (14);
- the housing (2) extends in a longitudinal direction;
- the carrying handle (3) also extends in the longitudinal direction of the housing (2); and wherein
- at least a portion of the housing (2) and a portion of the carrying handle (3) are integrally formed.

2. The inertial measuring device according to claim 1, wherein the inertial measuring unit (4) is a north-seeking means, comprising three gyroscopes and three acceleration sensors.

3. The inertial measuring device according to any one of the preceding claims, wherein the battery (5) is a rechargeable battery.

4. The inertial measuring device according to any one of the preceding claims, wherein the battery is exchangeably inserted into the housing (2).

5. The inertial measuring device according to any one of the preceding claims, wherein the interface (6) is a Bluetooth interface.

6. The inertial measuring device according to any one of the preceding claims, wherein the carrying handle (3) has a first handle area (10) extending substantially parallel to the fastening plate (14).

7. The inertial measuring device according to any one of the preceding claims, wherein the carrying handle (3) has a second handle area (11) adjacent to the first handle area (10), extending to the fastening plate (14) at an angle of more than 30 degrees, in particular, more than 45 degrees, in particular more than 60 degrees.

8. The inertial measuring device according to any one of the preceding claims, wherein a fastening means (17) for fastening a carrying strap is provided on the housing (2) and/or the carrying handle (3).

9. A system comprising
- an inertial measuring device (1) according to any one of the preceding claims;
- a mobile data terminal (8); and comprising
- a computer program able to run on the mobile data terminal (8); wherein
- data exchange between the inertial measuring device and the data terminal is possible via the interface (7).

10. The system according to claim 9, wherein the data terminal (8) has a display means for displaying the measurement results measured by the inertial measuring device and transmitted via the interface.

11. The system according to claim 9 or 10, wherein the data terminal (8) has an input means for inputting control commands, for controlling the inertial measuring device.

## Revendications

1. Appareil de mesure inertielle (1), avec
- une unité de mesure inertielle (4) pour déterminer une direction nord et pour déterminer des angles de position ;
- une batterie (5) ;
- une interface sans fil (6) ; et avec
- un boîtier (2) dans lequel sont logées l'unité de mesure inertielle (1), la batterie (5) et l'interface (6) ;
dans lequel
- sur le boîtier (2) est prévue une poignée de transport (3) qui est formée comme une poignée de transport à une main pour le transport conforme avec une seule main de l'appareil de mesure inertielle (1) ;
- le boîtier (2) présente sur son côté inférieur une plaque de fixation (14) s'étendant horizontalement, pour fixer l'appareil de mesure inertielle à un objet ;
- la poignée de transport (3) est disposée sur le côté supérieur du boîtier (2) à l'opposé de la plaque de fixation (14) ;
- le boîtier (2) s'étend dans une direction longitudinale ;
- la poignée de transport (3) s'étend elle aussi dans la direction longitudinale du boîtier (2) ; et dans lequel
- au moins une partie du boîtier (2) et une partie de la poignée de transport (3) sont formées d'un seul tenant.

2. Appareil de mesure inertielle selon la revendication 1, dans lequel l'unité de mesure inertielle (4) est un dispositif chercheur de nord avec trois gyroscopes et trois capteurs d'accélération.

3. Appareil de mesure inertielle selon l'une des revendications précédentes, dans lequel la batterie (5) est un accumulateur rechargeable.

4. Appareil de mesure inertielle selon l'une des revendications précédentes, dans lequel l'accumulateur est inséré de manière remplaçable dans le boîtier (2).

5. Appareil de mesure inertielle selon l'une des revendications précédentes, dans lequel l'interface (6) est une interface Bluetooth.

6. Appareil de mesure inertielle selon l'une des revendications précédentes, dans lequel la poignée de transport (3) présente une première zone de poignée (10) s'étendant sensiblement parallèlement à la plaque de fixation (14).

7. Appareil de mesure inertielle selon l'une des revendications précédentes, dans lequel la poignée de transport (3) présente une deuxième zone de poignée (11) s'étendant suivant un angle de plus de 30 degrés, en particulier de plus de 45 degrés, en particulier de plus de 60 degrés, par rapport à la plaque de fixation (14), qui fait suite à la première zone de poignée (10).

8. Appareil de mesure inertielle selon l'une des revendications précédentes, dans lequel il est prévu sur le boîtier (2) et/ou la poignée de transport (3) un dispositif de fixation (17) pour fixer une courroie de transport.

9. Système avec
- un appareil de mesure inertielle (1) selon l'une des revendications précédentes ;
- un terminal de données mobile (8) ; et avec
- un programme informatique exécutable sur le terminal de données mobile (8) ; dans lequel
- par l'interface (7) un échange de données entre l'appareil de mesure inertielle (1) et le terminal de données est possible.

10. Système selon la revendication 9, dans lequel le terminal de données (8) présente un dispositif d'affichage pour afficher les résultats de mesure mesurés par l'appareil de mesure inertielle et transmis via l'interface.

11. Système selon la revendication 9 ou 10, dans lequel le terminal de données (8) comporte un dispositif d'entrée pour entrer des ordres de commande, pour commander l'appareil de mesure inertielle (1).
